# EUROPÄISCHE PATENTSCHRIFT

(11) **EP 1 396 426 B1**
(45) Veröffentlichungstag und Bekanntmachung des Hinweises auf die Patenterteilung: **25.01.2006**
(21) Anmeldenummer: 03019809.7
(22) Anmeldetag: 30.08.2003
(51) Int. Cl.: B64D 17/34

(54) **Steuereinheit zum Abfangen von Lastengleitschirmen**
Flare control system for a load carrying parachute
Système de contrôle d'arrondissement d'un parachute

(30) Priorität: 05.09.2002 DE 10241585
(43) Veröffentlichungstag der Anmeldung: 10.03.2004
(73) Patentinhaber: EADS Deutschland GmbH, 85521 Ottobrunn (DE)
(72) Erfinder: Christof, Horst, 85653 Aying (DE); Schwärzler, Hans-Jürgen, 82024 Taufkirchen (DE)

(56) Entgegenhaltungen:
- EP-A- 1 108 647
- DE-A- 19 634 017
- DE-C- 4 433 211
- FR-A- 669 225

## Beschreibung

Die Erfindung betrifft ein Lastengleitfallschirm-System mit einem Lastenschirm mit einer Hinterkante, mit Schirmgurten, die den Lastenschirm mit einer Steuereinheit verbinden, mit einer an dem Lastenschirm mittels Lastgurten angehängten Traglast und mit zumindest einem mit der Hinterkante des Lastenschirms verbundenen Flarestrang zur Vergrößerung der Wölbung des Lastenschirms unter Ausnutzung der Gewichtskraft der Traglast, mit zumindest zwei Last-Rollen zum gleichsinnigen Aufrollen jeweils zweier Schirmgurte und mit zumindest einer Flarestrang-Rolle auf welche der zumindest eine Flarestrang aufrollbar ist, wobei die Drehbewegung der Lastrollen und der zumindest einen Flarestrang-Rolle miteinander gekoppelt sind.

Aus der DE 199 60 332 C1 ist ein Trage- und Verstellsystem mit einer Steuereinheit zur Durchführung von Abfang- und Kurvenflug-Manövern eines Lastengleitschirms mit Hinterkanten bekannt. Die Durchführung der Manöver erfolgt unter Ausnutzung der Gewichtskraft der Traglast, indem zwischen den mit den Hinterkanten verbundenen Steuerleinen und der Traglast ein Elektromotor zum Antrieb der Seiltrommel, auf der die Steuerleinen aufgerollt sind, ein Getriebe und eine Bremseinrichtung zwischengeschaltet sind. Das Getriebe, mit dem die Steuerleinen betätigt werden, macht das vorbekannte Trage- und Verstellsystem baulich aufwendig und dementsprechend kostenintensiv, was sich insofern als besonders nachteilig erweist, als solche Trage- und Verstellsysteme vorzugsweise im militärischen Bereich Anwendung finden und dort nach einmaligem Gebrauch als verloren gelten müssen. Darüber hinaus schränkt die bekannte Getriebeeinrichtung die Nutzlastkapazität solcher Trage- und Verstellsysteme ein.

Aus dem Dokument DE-A-19 634 017 ist ein as engleitfallschirm-System (Fig. 1) mit einer Steuereinheit zur Durchführung von Abfangmanövern aufgrund der Betätigung eines Flarestranges unter Ausnutzung der Gewichtskraft der Traglast bekannt. Das vorbekannte System umfasst eine Entriegelungseinrichtung, einen Höhensensor, welcher bei einem vorbestimmten Bodenabstand das Abfangmanöver einleitet, wobei eine Steuereinheit eine Getriebeeinheit mit Rollen zum gleichsinnigen Aufrollen mehrerer Gleitschirmgurte und zum gegensinnigen Abrollen anderer Gleitschirmgurte aufweist. Eine Koppelung der Bewegung von Gleitschirmgurten mit dem Flarestrang wird dort nicht gelehrt.

Aus dem Dokument EP-A-1 108 647 ist eine kopplung von Lastgurten mit den Steuerleinen bekannt (Figur 11).

Aufgabe der vorliegenden Erfindung ist es deshalb, ein Lastengleitfallschirm-System der vorbeschriebenen Bauart zu schaffen, das baulich einfach ausgestaltet ist, große Betriebssicherheit aufweist und darüber hinaus maximal mögliche Nutzlastkapazität gewährt. Darüber hinaus sollen die Baukosten eines solchen Systems im Hinblick auf den vorzugsweise militärischen Einsatzzweck minimal gehalten werden.

Erfindungsgemäß wird die gestellte Aufgabe dadurch gelöst, dass bei einem Lastengleitfallschirm-System nach dem Oberbegriff des Patentanspruchs 1 die Kopplung der Lastrollen und der Flarestrang-Rolle als drehsteife Anordnung auf derselben Welle ausgebildet ist, wobei die Schirmgurte einerseits und der Flarestrang andererseits gegensinnig aufgewickelt sind und dass die im Flug blockierte Welle mittels einer an sich bekannten Entriegelungseinrichtung, welche einen Höhensensor einschließt, in einer vorgegebenen Sollhöhe über Grund entriegelbar ist.

Der entscheidende Vorteil der Erfindung liegt darin, dass eine gegenüber den im Stand der Technik bekannten Einrichtungen baulich sehr einfache Lösung vorgeschlagen wird. Die erfindungsgemäße Lösung verzichtet auf den Einsatz von Getrieben, aufwendigen Stellantrieben wie z.B. Elektromotoren mit schweren Batterien, sicherheitskritischer Pyrotechnik, Hydraulik, Verbrennungsmotoren oder Pneumatik. Dadurch kann in erheblichem Maß Gewicht eingespart werden, was der Nutzlastkapazität zugute kommt. Nachdem solche. Lastengleitfallschirm-Systeme üblicherweise nach einemaligem Gebrauch verloren sind, ist auch die durch die bauliche Einfachkeit erzielte Kostenersparnis von besonderer Bedeutung.

Durch die erfindungsgemäße Lösung sind auch die Hinterkanten-Verstellgeschwindigkeit und der Hinterkanten-Verstellweg einfach einstellbar.

Zur weiteren Erläuterung der Erfindnung wird im folgenden auf die Figuren der Zeichnung Bezug genommen, die zeigen:

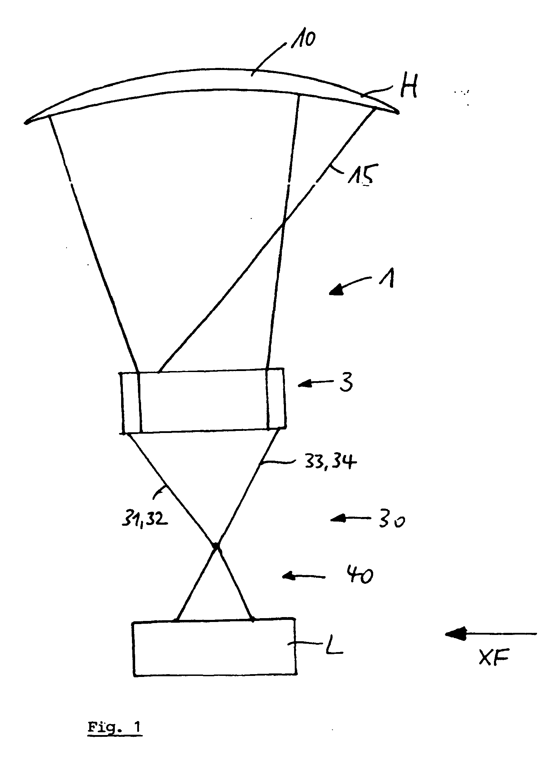

- Figur 1 eine schematische Seitenansicht eines Gleitfallschirm-Systems mit einer Steuereinheit und dem durch diese verstellbaren Flare-Strang und den Lastengurten, wobei die Steuereinheit nach dem Prinzip der Lastabsenkung funktioniert,
- Figur 2 eine perspektivische Darstellung eines Ausschnittes des Gleitfallschirm-Systems nach der Figur 1 und einen Abschnitt des durch diese verstellbaren Flare-Stranges und der Lastengurte, wobei zusätzlich beispielhaft die Sichtlinie eines vorgesehenen Lasser-Höhenmessers eingetragen ist,
- Figur 3 eine perspektivische Darstellung der aufgeschnittenen Steuereinheit des Gleitfallschirm-Systems nach der Figur 1 mit einem Abschnitt des durch diese verstellbaren Flare-Stranges und der Lastengurte, wobei im wesentlichen nur die Flarestrang- und die Lastgurt-Rollen in der Steuereinheit dargestellt sind,
- Figur 4 eine perspektivische Darstellung einer Ausführungsform der aufgeschnittenen Steuereinheit des Gleitfallschirm-Systems nach der Figur 1 in einer Detailansicht mit einem Abschnitt des durch diese verstellbaren Flare-Stranges und der Lastengurte,
- Figur 5 eine schematische Darstellung des Gleitfallschirm-Systems nach der Figur 1 und des Prinzips der Lastabsenkung relativ zur Steuereinheit und Gewinnung der daraus entnehmbaren Energie für die Bewegung der Hinterkanten des Gleitschirms,
- Figur 6a eine schematische Darstellung der Funktionsweise des Laser-Höhenmessers zur Auslösung der Betätigung der Hinterkante des Lastengleitfallschirms und der Funktion der Lastabsenkung vor Auslösung derselben,
- Figur 6b eine schematische Darstellung der Funktionsweise des Laser-Höhenmessers zur Auslösung der Betätigung der Hinterkante des Lastenlgeitfallschirms und der Funktion der Lastabsenkung nach Auslösung derselben,
- Figur 7 eine Steuereinheit nach dem Prinzip einer Schirm-Anhebung zur Betätigung der Hinterkanten des Lastenschirms,
- Figur 8 eine schematische Darstellung des erfindungsgemäßen Gleitfallschirm-Systems mit einer Steuereinheit nach der Figur 7 und des Prinzips der Lastabsenkung relativ zur Steuereinheit,
- Figur 9 eine Ausführungsform der Entriegelungs-Einrichtung mit einer Ausführungsform des Höhensensors zur Auslösung des Vorganges der Betätigung der Hinterkante in perspektivischer und teilweise aufgeschnittener Darstellungsform.

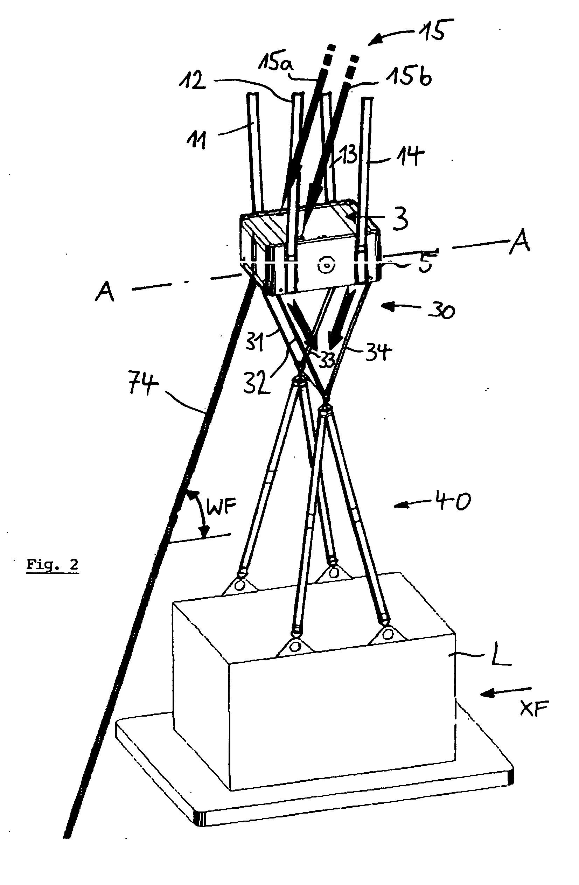

Das in Figur 2 gezeigte Lastengleitfallschirm-System 1 weist eine Steuereinheit 3 mit einem Tragrahmen 5 oder eine Box auf, an dem Schirmgurte 11, 12, 13, 14 befestigt sind. Über die Schirmgurte steht die Steuereinheit 3 mit einem LastenGleitfallschirm 10 in Verbindung, der im folgenden auch kurz Schirm oder Gleitfallschirm oder Lastenschirm genannt wird. Vom Gleitfallschirm 10 führt auch zumindest ein Flare-Seil oder Flare-Strang 15, 15a, 15b zur Steuereinheit 3, die eine Stell-Einheit 20 aufweist, in der zumindest ein Flare-Strang 15, 15a, 15b auf- und abrollbar ist.

Die Last L hängt über eine Aufhänge-Vorrichtung 30 mit die Lastgurten 31, 32, 33, 34 an der Steuer-Einheit 3. Die Aufhänge-Vorrichtung 30 kann mit einer weiteren, von der Last L ausgehenden Aufhänge-Vorrichtung 40 gekoppelt sein.

Die Aufhänge-Vorrichtung 30 ist vorzugsweise derart gestaltet, daß diese eine Dreipunktaufhängung zur Anschlußstelle an der Last L oder der angekoppelten weiteren Aufhänge-Vorrichtung darstellt. Die Dreipunkt-Aufhänguing wird realisiert z.B. durch die Lastengurte 33, 34 bzw. 31, 32 und entsprechende Zuführungen zu Lastrollen. Dadurch wird ein ebenes Halten und Bewegen der Last L während des Fluges und auch bei einem Flare-Manöver sichergesellt.

Die Steuereinheit 3 weist eine, soweit Seitenwinde nicht berücksichtigt werden, in die Flugrichtung XF verlaufende Achse A auf. Auf jeder Seite der Achse A sind in der Steuer-Einheit 3 jeweils eine Flarestrang-Rolle FR1 bzw. FR2 und eine Lastgurt-Rolle oder Last-Rolle LR1 bzw. LR2 angeordnet. Das auf jeder Seite der Achse A befindliche Paar aus der Flarestrang-Rolle und der Lastgurt-Rolle ist mittels geeigneter Befestigungsmittel in Drehrichtung fixiert. Weiterhin sind die beiden Paare aus jeweils einer Flarestrang-Rolle und einer Lastgurt-Rolle auf jeder Seite der Steuer-Einheit, über eine Welle 50 drehsteif gekoppelt.

Auf der Lastgurt-Rolle FR1 der ersten Seite in bezug auf die Achse A sind ein erster Lastgurt 31 und ein zweiter Lastgurt 32 gleichsinnig aufgerollt. In analoger Weise sind auf der Lastgurt-Rolle FR2 der zweiten Seite in bezug auf die Achse A ein dritter Lastgurt 33 und ein vierter Lastgurt 34 gleichsinnig aufgerollt. Dadurch, daß die Lastgurte 31, 32 bzw. 33, 34 gleichsinnig aufgerollt sind, werden in einer bestimmten ersten Drehrichtung D1 beide Lastgurte 31, 32 bzw. 33, 34 zugleich abgerollt und in der entgegengesetzten Drehrichtung aufgerollt:

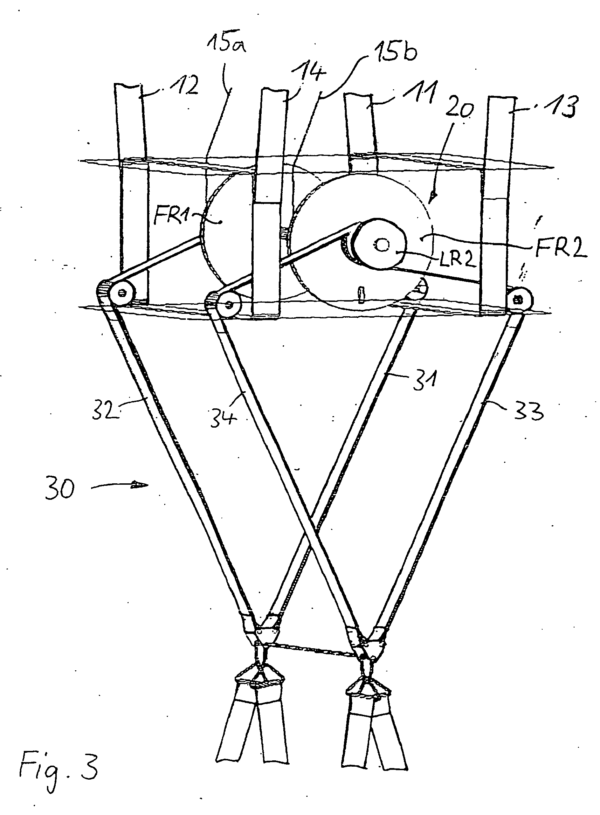

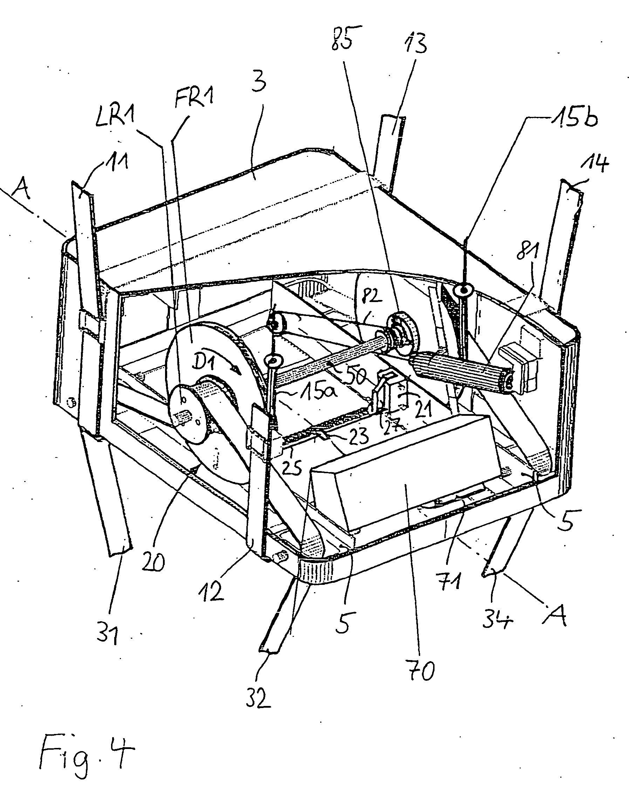

Der zumindest eine Flare-Strang 15, 15a, 15b ist auf der diesem jeweils zugeordneten Flarestrang-Rolle FR1 oder FR2 derart aufgewickelt, dass er in der genannten Drehrichtung D1 aufgerollt wird. In den Figuren 3 und 4 sind beispielhaft jeweils eine Flarestrang-Rolle FR1 oder FR2 auf jeder Seite der Achse A dargestellt. Diese beiden Flarestrang-Rollen FR1 und FR2 sind mit der Lastgurt-Rolle LR1 bzw LR2 derselben Seite drehsteif gekoppelt.

Als Wirkung der Drehung der Lastgurt-Rolle LR1 bzw LR2 in der genannten Drehrichtung D1 werden die Flarestränge 15a, 15b auf die Flarestrang-Rollen FR1 und FR2 aufgewickelt und somit die mit diesen verbundene Hinterkanten-Klappe H nach unten gezogen. Dadurch wird die Wölbung vergrößert und die Auftriebskraft des Gleitfallschirms 10 erhöht und die Sinkgeschwnidgkeit des Lastengleitfallschirm-Systems 1 verringert sich. Auf diese Weise wird erreicht, daß die Last L mit geringerer Geschwindigkeit am Boden aufgesetzt wird.

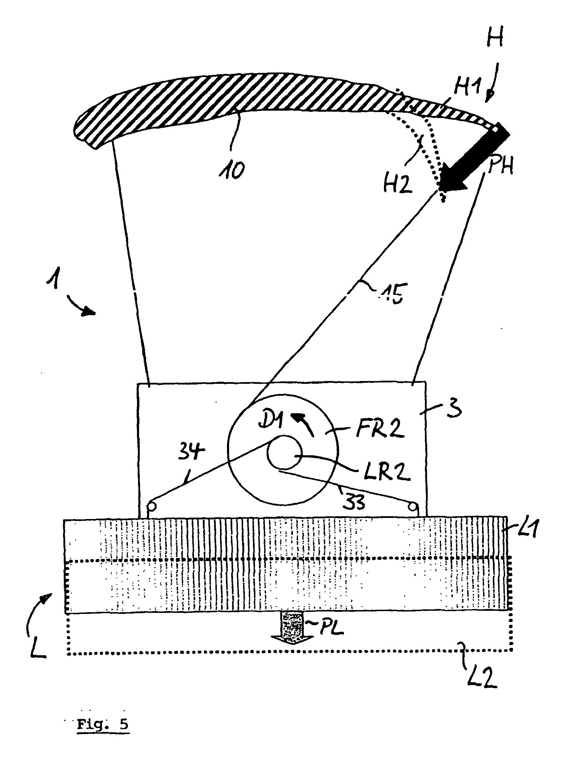

In der Figur 5 ist das Prinzip der Lastabsenkung schematisch dargesellt. Das Bezugszeichen L1 weist auf die Position der Last L vor deren Absenken, und das Bezugszeichen L2, weist auf die Last L nach deren Absenken relativ zur Steuereinheit 3 durch dieselbe. Die Veränderung der Lastposition ist mit dem Pfeil PL angedeutet. Entsprechend weist das Bezugszeichen H1 auf die Position der Hinterkante H vor deren Absenken oder Ziehen, und das Bezugszeichen H2 weist auf die Position der Hinterkante H nach deren Absenken oder Ziehen durch die Steuereinheit 3. Die Veränderung der Hinterkantenposition ist mit dem Pfeil PH angedeutet.

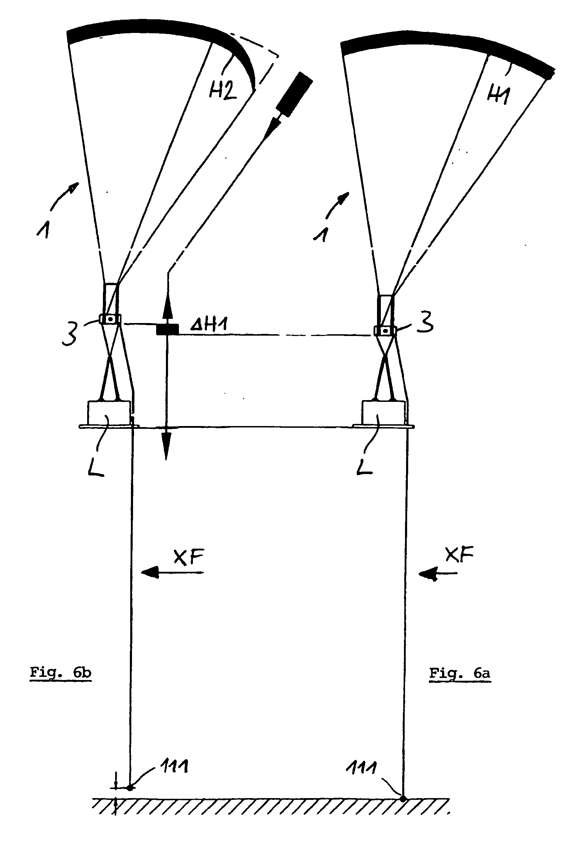

In den Figuren 6a und 6b, in denen die Bezugszeichen aus der Figur 5 für analoge Merkmale übernommen sind, sind die Flughöhen über einem fiktiven, ebenen Grund vor und nach dem Absenken der Last L schematisch dargestellt. Aus dem Vergleich der Figuren 6a und 6b geht hervor, dass aufgrund einer relativ großen Masse der Last L die Höhe derselben über dem Boden im wesentlichen unverändert bleibt, wenn die Lastabsenkung durchgeführt wird, so daß die Gefahr einer Beschädigung der Last bei der Durchfürhung des Flare-Manövers gering ist.

Weiterhin ist eine Kontroll-Einheit 70 (vergl. Fig. 4) in oder an der Steuereinheit 3 oder an anderer Stelle des Lastengleitfallschirm-Systems 1 angeordnet, die funktional mit der Entriegelungs-Einrichtung 21 in Verbindung steht. Die Kontroll-Einheit 70 umfaßt einen Laser-Höhenmesser 71 zur Messung der momentanen Höhe der Last L über Grund und insbesondere der momentanen Höhe der dem Grund zugewandten Unterseite der Last L über Grund. Diese Höhen können abgeleitet sein aus der Messung der momentanen Höhe des Laser-Höhenmessers über Grund. Mit dem Laser-Höhenmesser 71 ist funktional eine Vergleichs-Einrichtung (nicht dargestellt) verbunden, die die momentane ermittelte oder abgeleitet Höhe mit einer Soll-Höhe vergleicht. In der Figur 2 ist beispielhaft eine Sichtlinie 74 oder der Strahl des vorgesehenen Laser-Höhenmessers eingetragen. Der Meßwinkel WF (Fig. 2) des Laserstrahls 74 in bezug auf einen fiktiven ebenen Grund ist vorzugsweise im Bereich von 60 bis 80 Grad vorgesehen. Bei diesem Winkel wird eine Störung durch die Last L weitgehend vermieden. Bei Erreichen der Soll-Höhe wird ein Signal an eine der Vergleichs-Einrichtung funktional zugeordnete Schaltungs-Einrichtung übermittelt, aufgrund dessen die Entriegelungs-Einrichtung 21 die Flarestrang-Rollen FR1, FR2 und die Lastgurt-Rollen LR1, LR2 entriegelt, wodurch im Flug aufgrund der Wirkung der Gewichtskraft der Last L die Aufhänge-Vorrichtung 30 oder deren Lastgurte 31, 32, 33, 34 und damit die Last L abgelassen wird. Aufgrund der Wirkung der Gewichtskraft der Last L wird in beschriebener Weise die Hinterkantenklappe H nach unten gezogen, um ein Flare-Manöver durchzuführen.

Die Entriegelungs-Einrichtung 21 mit einem Entriegelungs-Bolzen 27 weist vorzugsweise eine Schneid-Vorrichtung 23 auf, die über das Signal der Vergleichs-Einrichtung betätigt wird. Bei der Betätigung der Schneid-Vorrichtung 23 wird ein Zugseil 25 durchgeschnitten. Dieses steht mit einem drehbar an einer Drehachse 26 gelagerten und in die Verriegelungs-Position der Entriegelungs-Einrichtung 21 vorgespannten Entriegelungs-Bolzen 27 derart in Verbindung, daß beim Durchschneiden des Zugseils 25 der Entriegelungs-Bolzen 27 gelöst wird und dieser die Flarestrang-Rollen FR1, FR2 entriegelt, um das Flare-Manöver durchzuführen.

Die Einrastung bzw. Entriegelung kann auch mit anderen Einrichtungen realisiert sein. Wichtig ist, daß auf ein entsprechendes Signal der Vergleichs-Einrichtung die Flarestrang-Rollen bzw. Lastrollen über eine Entriegelungs-Einrichtung 21 entriegelt werden.

Weiterhin kann eine Brems-Einrichtung vorzugsweise in Form einer Ölbremse vorgesehen sein, mit der über die Einstellung der Bremswirkung, im Beispiel über den Öldruck, die Seilzug-Geschwindigkeit des Flare-Stranges 15 nach dem Lösen der Verriegelungseinrichtung angepaßt werden kann. Dazu kann ein Bremszylinder 81 mit einem in diesem gedämpft gelagerten Bremsstrang 82 vorgesehen sein, der an der Welle 50 oder einer mit dieser fixierten Rolle 85 aufgerollt ist.

An einer der Flarestrang-Rollen FR1, FR2 oder der Lastgurt-Rollen LR1, LR2 können Verriegelungs-Elemente vorgesehen sein, die verschiedene Verriegelungspositionen festlegen. Durch diese Verriegelungspositionen kann der Flarezugweg angepaßt werden, wodurch verschiedene Auftriebswirkungen über die Zeit beim Flare erreicht werden können.

Die Einstellung der Bremswirkung und/ oder Einstellung des Flarezugwegs kann mittels einer Einstell-Vorrichtung manuell oder über eine Regelungs- oder Kontroll-Einrichtung, wie.z.B. die Kontroll-Einheit 70 erfolgen.

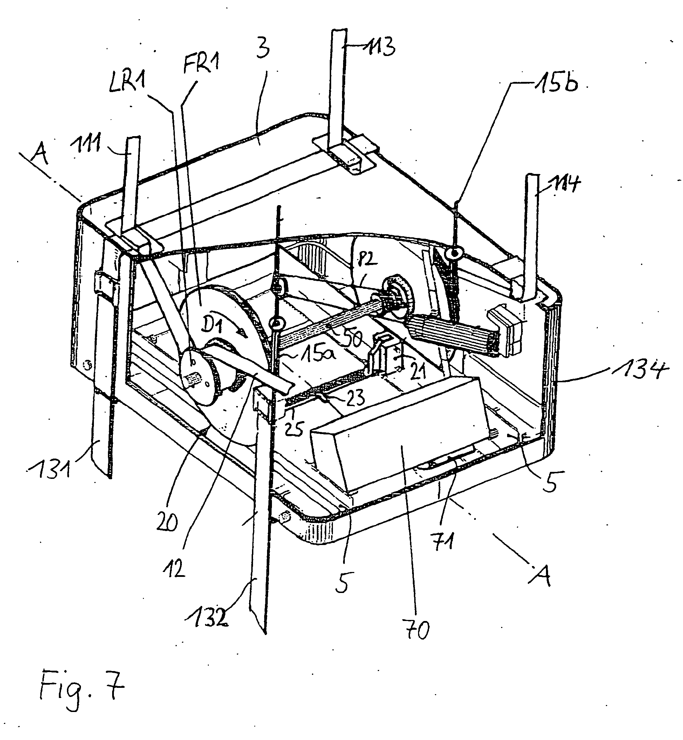

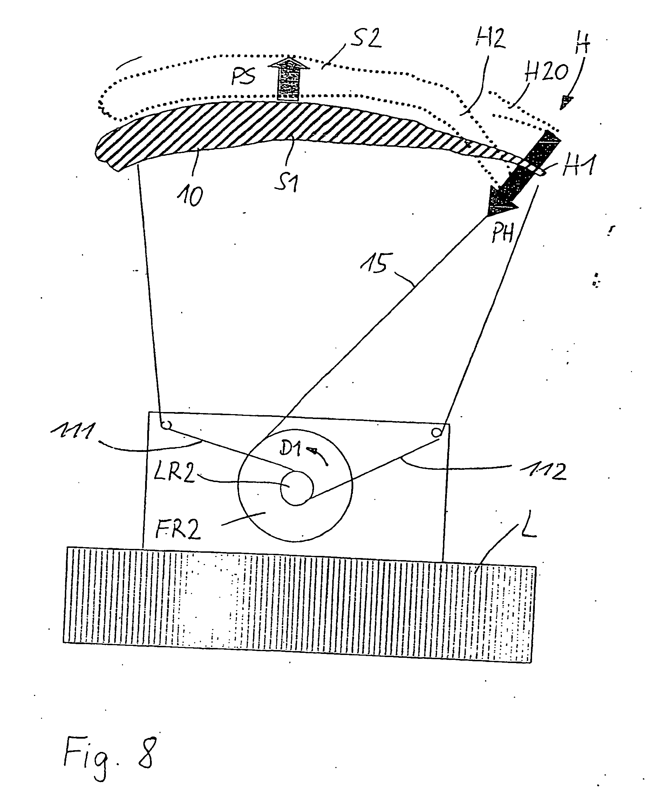

In den Figuren 7 und 8 ist die gegenüber den Figuren 4 und 5 erfindungsgemäß abgeänderte Steureinheit 3 dargestellt, die nach dem Prinzip der Lastenschirm-Anhebung zur Manövrierung unter Ausnutzung der Gewichtskraft der Last L arbeitet. In diesen Figuren sind Merkmale analoger Funktion mit denselben Bezugszeichen bezeichnet wie in den vorangehenen Figuren. Im folgenden wird im wesentlichen nur auf Abwandlungen von den zuvor beschriebenen Figuren bezug genommen. In der Steuereinheit 3 sind jeweils zwei Schirmgurte, z.B. die Schirmgurte 31, 32 oder 33, 34, an den Lastrollen LR1 bzw. LR2 paarweise gleichsinnig aufgerollt. An den Flarerollen LR1, LR2 sind die Flare-Stränge 15a, 15b derart aufgerollt, dass bei Drehung der Kombination aus Last- und Flarestrang-Rollen in einer Drehrichtung D1 die Schirmgurte ab- und die Flare-Stränge aufgerollt werden. Durch das Abrollen der Schirmgurte wird der Schirm 10 relativ zur Steuereinheit 3 abgehoben.

Die Welle 50 kann auch geteilt sein. Dadurch wird Einbauraum in der Steuereinheit 3 gewonnen. In einer bevorzugten Ausführungsform der Steuereinheit 3 wird in diesem Fall auf eine Kopplung des Rollenpaares LR1, FR1 mit dem Rollenpaar LR2, FR2 verzichtet. Im Versuch hat sich gezeigt, dass diese entkoppelte Ausführungsform dennoch ausreichend Stabilität in Hinsicht auf die Lage der Last L relativ zur Steuereinheit 3 oder dem Lastenschirm 10 liefert.

In der Figur 8 ist das Prinzip dieser Lastenschirm-Anhebung zur Manövrierung unter Ausnutzung der Gewichtskraft der Last L schematisch dargesellt. Das Bezugszeichen S1 weist auf die Position des Lastenschirms 10 vor dessen Anheben, und das Bezugszeichen S2 weist auf die Position des Lastenschirms 10 nach dessen Anheben relativ zur Steuereinheit 3 durch dieselbe. Die Veränderung der Schirmposition ist mit dem Pfeil PS angedeutet. Entsprechend weist das Bezugszeichen H1 auf die Position der Hinterkante H vor deren Absenken oder Ziehen bzw. dem Anheben des Schirms 10, und das Bezugszeichen H2 weist auf die Position der Hinterkante H nach deren Absenken oder Ziehen bzw. nach dem Anheben des Schirms 10 durch die Steuereinheit 3. Die Veränderung der Hinterkantenposition ist mit dem Pfeil PH angedeutet.

Der Abstand zwischen der Steuereinheit 3 und der Last L bleibt während des Flare-Manövers unverändert, während sich dabei der Abstand zwischen dem Lastenschirm 10 und der Steuereinheit 3 vergrößert, d. h. die Steuereinheit 3 kann mit entsprechenden Befestigungsmitteln direkt an der Last befestigt sein, wodurch entsprechende Lastgurte zur Aufhängung der Last beabstandet von der Steuereinheit entfallen können, was sowohl baulich einfacher und damit störunanfälliger ist als auch Baugewicht einspart.

In einer bevorzugten Ausführungsform ist in der Steuereinheit ein Übersetzungsverhältnis vorzugsweise zwischen 1:3 und 1:5 vorgesehen. Alternativ oder zusätzlich wird die Kinematik in bezug auf die Betätigung der Schirmgurte und der Flarestränge derart ausgelegt, dass sich die Last L während der Schirmabhebe-Phase aufgrund der Erdbeschleunigung um 5 bis 15% absenkt.

Zur Auslösung des Flare-Manövers ist erfindungsgemäß eine Flare-Auslöseeinrichtung mit einem Höhensensor zur Messung der momentanen Flughöhe der Last L oder eines anderen Bezugspunktes des Lastengleitfallschirm-Systems 1, mit einer Vergleichseinrichtung zum Vergleich der gemessenen Höhen mit einer Sollhöhe und mit einer Entriegelungs-Einrichtung 21 vorgesehen, wobei die Vergleichs-Einrichtung direkt oder über weitere Funktionen oder Schaltungen die Entriegelungs-Einrichtung 21 auslöst und betätigt.

Grundsätzlich kann in die Flare-Auslöseeinrichtung eine ZeitverzögerungsSchaltung integriert sein, um die Entriegelung nach dem Erreichen der vorbestimmten Sollhöhe zeitlich zu verzögern.

Auf ein entsprechendes Signal der Vergleichs-Einrichtung wird die Entriegelungs-Einrichtung 21 zur Auslösung eines Flare-Manövers betätigt. In der Figur 4 ist eine Ausführungsform der Entriegelungs-Einrichtung 21 mit einer mit einem Zugseil 25 zusammenwirkenden Schneid-Vorrichtung 23 und einem in die Verriegelungs-Position vorgespannten Entriegelungs-Bolzen 27 dargestellt.

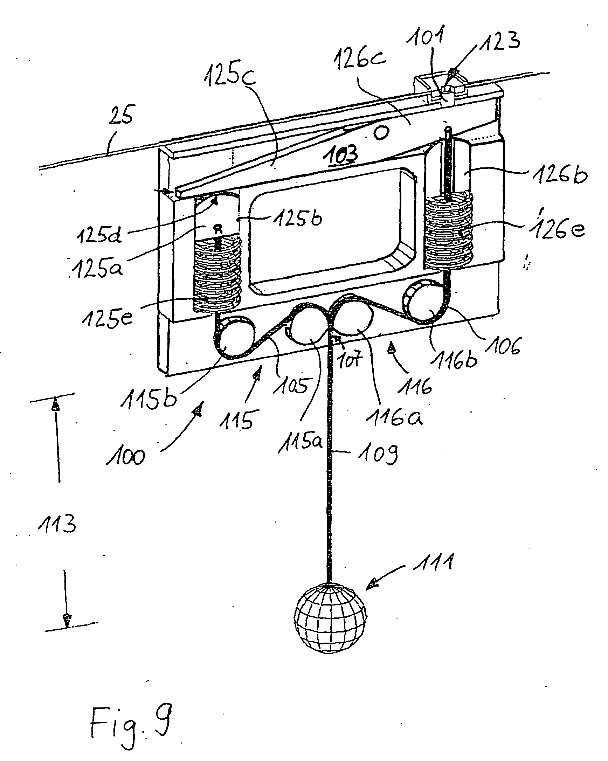

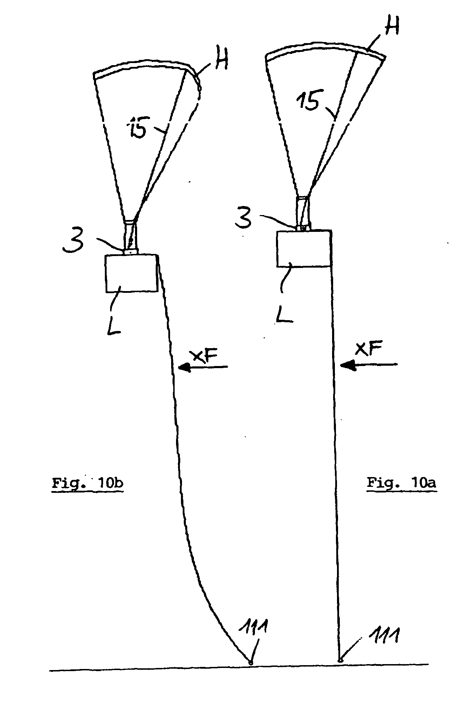

In der Figur 9 ist eine weitere Ausführungsform einer Entriegelungs-Einrichtung oder Flare-Auslöseeinrichtung 100 dargestellt. Dabei ist ein Verriegelungselement 101 vorgesehen, das mit der Welle 50 und/oder mit einer Last-Rolle oder Flarestrang-Rolle bzw. bei der Ausführungsform ohne durchgehende Welle 50 mit den Last-Rollen oder Flarestrang-Rollen beider Seiten der Bezugsachse A zusammenwirken kann. Alternativ kann das Verriegelungselement 101 mit einer Verschluß-Vorrichtung 123 zusammenwirken, bei der zwei Teile des Zugseils 25 zusammengehalten und somit die Getriebeinheit 20 in ihrer verriegelten Stellung gehalten wird.

Die Entriegelungs-Einrichtung 21 oder Flare-Auslöseeinrichtung 100 weist ein über einen Meßstrang 109 von der Steuereinheit 3 einen vorbestimmten Abstand 113 herabhängendes Gewicht 111 oder einen Meßkörper auf. Der vorbestimmte Abstand 113 entspricht gegebenenfalls unter Berücksichtigung der Größe des Gewichts 111 einer vorbestimmten Soll-Höhe, die zur Auslösung des Flare-Manövers zu messen und abzutasten ist. Die Entriegelungs-Einrichtung 100 wird betätigt sowohl wenn das Gewicht 111 den Boden berührt und dadurch der Messstrang 109 entlastet wird, als auch wenn das Gewicht 111 an Hindernissen dieses Bodens hängen bleibt und der Messstrang dadurch belastet wird.

Eine Ausführungsform der Entriegelungs-Einrichtung 100 mit dem Verriegelungselement 101 wird betätigt durch eine Ausgleichseinrichtung in Form eines drehbar gelagerten und zwei Hebelarme 125c, 126c ausbildenden Wägebalkens 103, wobei das Verriegelungselement 101 bei der Belastung des Messstranges 109 als auch bei der Entlastung in ein und derselben Richtung bewegt wird. Eine erste Vorspann-Einrichtung 125e wirkt mittels eines Führungselementes 125a auf den ersten Hebelarm 125c, wobei die Auslenkung der ersten Vorspann-Einrichtung 125e von der Zugkraft eines ersten, mit dem Gewicht 111 verbundenen Stranges 105 bestimmt wird. Ein zweiter mit dem Gewicht 111 verbundener Strang 106 ist mit dem zweiten Hebelarm 126c verbunden. An diesem zweiten Hebelarm 126c soll außerdem eine zweite Vorspann-Einrichtung 126e wirken, die an diesem eine Federkraft entgegengesetzt zur von dem zweiten Strang 106 ausgeübten Zugkraft ausübt. Eine Vorspanneinrichtung kann entfallen, wenn zumindest die andere entsprechend der Länge der jeweils wirksamen Hebelarme dimensioniert ist. Die Ausgleichseinrichtung befindet sich bei frei hängendem Gewicht 111 im Gleichgewicht.

Die erste Vorspann-Einrichtung 125e spannt den Wägebalken 103 an dem ersten Hebelarm 125c in einer ersten Drehrichtung vor, während die zweite Vorspann-Einrichtung 126e den Wägebalken 103 an dem zweiten Hebelarm entgegengesetzt zur ersten Drehrichtung vorspannt. Weiterhin greift an derselben Stelle des zweiten Hebelarms 126c der zweite Strang 106 direkt an. In dieser dargestellten Ausführungsform steht der erste 105 und der zweite Strang 106 beispielsweise über eine Verzweigungsstelle 107 mit einem Messstrang 109 in Verbindung. Der erste Strang 105 wird über eine erste Lagerung 115 geführt und ist mit einem in einer entsprechenden Führungsbahn 125b beweglichen Führungselement 125a verbunden. Das Führungselement 125a liegt im Betrieb mit einer Anlagefläche 125d am ersten Hebelarm 125c des Wägebalkens 103 an. Dadurch kann das Führungselement 125a eine Druckkraft auf den ersten Hebelarm 125c ausüben. Der zweite Strang 106 wird über eine zweite Lagerung 116 zum zweiten Hebelarm 126c des Wägebalkens 103 geführt und steht mit diesem in Verbindung.

Die beschriebene Funktionsweise kann dadurch erreicht werden, dass der zweite Hebelarm 126c, der kürzer als der erste Hebelarm 125c ist, ebenfalls mittels einer Vorspann-Einrichtung 126e vorzugsweise in Form einer Feder entgegen der durch das Gewicht auf den ersten Strang 106 ausgeübten Zugkraft, also ebenfalls in Richtung einer Entlastung des zweiten Hebelarms 126c vorgespannt ist. Dadurch kann das Führungselement 125a eine Zugkraft und aufgrund der Federkraft der Vorspann-Einrichtung auch eine Druckkraft auf den zweiten Hebelarm 126c ausüben. Zwischen der zweiten Vorspann-Einrichtung 126e und dem zweiten Hebelarm 126c kann ein in einer Führung 126a geführtes Führungselement 126b vorgesehen sein, das mit einer Anlagefläche 126d des zweiten Hebelarms 126c zusammen wirkt und im Betrieb an diesem anliegt.

Die Länge des ersten Hebelarms 125c kann größer als die Länge des zweiten Hebelarms 126c sein. Die Längen der Hebelarme müssen mit den von Gewicht auf den Balken ausgeübten Kräften und den von der zumindest einen Vorspanneinrichtung auf den Balken ausgeübten Kräften abgestimmt sein, um die beschriebene Funktionsweise zu bewerkstelligen. Das mittels der Ausgleichseinrichtung gegebenenfalls betätigte Verriegelungselement 101 steht mit der Ausgleichs-Einrichtung derart in Verbindung, daß bei einer Belastung des zweiten Hebelarms 126c oder einer der Belastung des zweiten Hebelarms 126c entsprechenden Bewegung desselben das Verriegelungselement 101 zur Entriegelung oder Öffnung der Verschluß-Vorrichtung betätigt wird. In der in Figur 9 dargestellten Ausführungsform der Entriegelungs-Einrichtung 100 ist der Wägebalken in Verbindung mit einem Verriegelungselement 101 unterhalb des Zugseils 25 angeordnet, so daß bei Absenken des zweiten Hebelarms 126c das Zugseil 25 geteilt wird. Dieses geschieht durch Herausfahren des Verrieglungselements 101 nach unten aus der Verschluß-Vorrichtung 123.

Die Führungen der Stränge 105, 106 werden vorzugsweise jeweils aus einem Rollenpaar einer ersten Rolle 115a bzw. 116a zur Umlenkung des von außerhalb der Auslöse-Einrichtung 100 kommenden Stränge 105 bzw. 106 und aus einer zweiten Rolle 115b bzw. 116b zur Umlenkung gebildet. Die Rollen sind in der Flare-Auslöse-Einrichtung 100 oder einem Tragrahmen derselben gelagert. Die Lagerungen könnten auch Getriebe-Einrichtungen zur Beeinflussung der Gleichgewichtsverhältnisse umfassen.

Im Betrieb drückt die erste Vorspann-Einrichtung 125e gegen die Gewichtskraft des Gewichts 111 gegen den ersten Hebelarm 125c, während die zweite Vorspann-Einrichtung 126e den Wägebalken 103 im Gleichgewicht hält. Durch die erfindungsgemäße Flare-Auslöse-Einrichtung 100 wird sichergestellt, daß eine Entriegelung und somit Auslösung des Flare-Manövers erfolgt, sowohl wenn das Gewicht 111 vom Boden relativ zur Last L oder der Steuereinheit 3 bei Erreichen einer entsprechenden Soll-Höhe über Grund angehoben wird, als auch wenn das Gewicht 111 am Boden aufgrund etwa von Kulturbeschaffenheit des Bodens, also z.B. aufgrund der Vegetation, hängenbleibt.

## Patentansprüche

1. Lastengleitfallschirm-System mit einem Lastenschirm (10) mit einer Hinterkante (H), mit Schirmgurten (11, 12, 13, 14), die den Lastenschirm (10) mit einer Steuereinheit (3) verbinden, mit einer an der Steuereinheit hängenden Traglast (L) und mit zumindest einem mit der Hinterkante (H) des Lastenschirms (10) verbundenen Flarestrang (15; 15a, 15b) zur Vergrößerung der Wölbung des Lastenschirms (10) unter Ausnutzung der Gewichtskraft der Traglast (L) mit zumindest zwei Lastrollen (LR1 bzw. LR2) zum gleichsinnigen Aufrollen jeweils zweier Schirmgurte (11, 12, 13, 14) und mit zumindest einer Flarestrang-Rolle (FR1, FR2), auf welche der zumindest eine Flarestrang (15a, 15b) aufrollbar ist, wobei die Drehbewegung der Lastrollen (LR1, LR2) und der zumindest einen Flarestrang-Rolle miteineinander gekoppelt sind, **dadurch gekennzeichnet, dass** die Kopplung der Lastrollen (LR1, LR2) und der Flarestrang-Rolle (FR1, FR2) als drehsteife Anordnung auf derselben Welle (50) ausgebildet ist, wobei die Schirmgurte (11, 12, 13, 14) einerseits und der Flarestrang (15a, 15b) andererseits gegensinnig aufgewickelt sind und dass die im Flug blockierte Welle (50) mittels einer an sich bekannten Entriegelungseinrichtung (21), welche einen Höhensensor (71) einschließt, in einer vorgegebenen Sollhöhe über Grund entriegelbar ist.

2. Lastengleitfallschirm-System nach Anspruch 1, **dadurch gekennzeichnet, dass** der Höhensensor ein Laser-Höhenmesser (71) zur Messung der Höhe über Grund ist.

3. Lastengleitfallschirm-System nach einem der voranstehenden Ansprüche, **dadurch gekennzeichnet, dass** beide Last-Rollen (LR1 bzw. LR2) jeweils mit einer Flarestrang-Rolle (FR1, FR2) drehsteif verbunden sind und auf derselben Welle (50) drehsteif angeordnet sind.

4. Lastengleitfallschirm-System nach einem der voranstehenden Ansprüche, **dadurch gekennzeichnet, dass** die Entriegelungs-Einrichtung (21) einen mit einem Zugseil (25) in seine Verriegelungsposition vorgesapnnten Entriegelungs-Bolzen (27) und eine mit dem Zugseil (25) zusammenwirkende Schneid-Vorrichtung (23) aufweist, wobei die Schneid-Vorrichtung (23) bei Erreichung der vorgegebenen Sollhöhe betätigt wird.

5. Lastengleitfallschirm-System nach einem der voranstehenden Ansprüche, **dadurch gekennzeichnet, dass** an der Entriegelungseinrichtung (21) Verriegelungs-Elemente vorgesehen sind, mit denen verschiedene Verriegelungspositionen zur Anpassung des Flarezugwegs festlegbar sind, um dementsprechend unterschiedlich große Auftriebswirkungen über die Zeit beim Flare einzustellen.

6. Lastengleitfallschirm-System nach einem der voranstehenden Ansprüche, **dadurch gekennzeichnet, daß** eine Einstell-Vorrichtung zur Einstellung des Flarezugwegs vorgesehen ist, mit der manuell oder über eine Regelungs- oder Kontroll-Einrichtung die Einstellung des Flarezugwegs erfolgen kann.

7. Lastengleitfallschirm-System nach einem der voranstehenden Ansprüche, **dadurch gekennzeichnet, dass** eine Brems-Einrichtung (81, 82, 85) vorgesehen ist, mit der über die Einstellung der Bremswirkung die Seilzug-Geschwindigkeit des Flare-Stranges (15; 15a, 15b) nach dem Lösen der Entriegelungseinrichtung (21) angepaßt werden kann.

8. Lastengleitfallschirm-System nach Anspruch 7, **dadurch gekennzeichnet, dass** eine Einstell-Vorrichtung zur Einstellung der Bremswirkung beim Abrollen des Flarestranges vorgesehen ist, mit der manuell oder über eine Regelungs- oder Kontroll-Einrichtung die Einstellung der Bremswirkung erfolgen kann.

9. Lastengleitfalischirm-System nach einem der voranstehenden Ansprüche, **dadurch gekennzeichnet, dass** die Entriegelungs-Einrichtung (100) zur Entriegelung der Lastrollen (LR1 bzw. LR2) ein Verriegelungselement (101) aufweist, welches durch eine Ausgleichseinrichtung in Form eines drehbar gelagerten und zwei Hebelarme (125c, 126c) ausbildenden Wägebalkens (103) betätigt wird,
- wobei eine erste Vorspann-Einrichtung (125e) in einer ersten Drehrichtung auf den ersten Hebelarm (125c) wirkt, wobei ein erster von einem Gewicht (111) belasteter Strang (105) die erste Vorspann-Einrichtung (125e) entgegen der ersten Drehrichtung vorspannt und
- wobei ein zweiter von dem Gewicht (111) belasteter Strang (106) am zweiten Hebelarm (126c) befestigt ist, so dass eine im Strang wirkende Zugkraft auf den zweiten Hebelarm (126c) in der ersten Drehrichtung einwirkt und auf den zweiten Hebelarm (126c) außerdem eine zweite Vorspann-Einrichtung (126e) einwirkt, die auf diesen eine Federkraft entgegengesetzt zur ersten Drehrichtung ausübt, und wobei
- das Gewicht (111) an einem Messstrang (109) von der Entriegelungseinrichtung (100) herabhängt, dessen Länge der vorbestimmten Sollhöhe zur Auslösung des Flaremanövers über Grund entspricht und mit dem die Stränge (105, 106) verbunden sind und wobei
- die Länge des ersten Hebelarmes (125c) und die an diesem angreifende Vorspanneinrichtung sowie die Länge des zweiten Hebelarms (126c) und die an diesem angreifende Vorspanneinrichtung, sowie das Gewicht (111) derart dimensioniert sind, dass sich der Wägebalken (103) in ein- und dieselbe Richtung dreht, wenn der Messstrang (109) durch Aufkommen des Gewichts (111) auf Grund entlastet wird als auch wenn der Messstrang (109) zusätzlich zum Gewicht (111) belastet wird.

## Claims

1. A load-carrying gliding parachute system comprising a load-carrying parachute (10) with a rear edge (H), parachute belts (11, 12, 13, 14) which connect the load-carrying parachute (10) to a control unit (3), a load (L) hanging from the control unit, and at least one flare cord (15; 15a, 15b) which is connected to the rear edge (H) of the load-carrying parachute (10) and is provided for increasing the curvature of the load-carrying parachute (10) by utilising the weight of the load (L) by means of at least two load pulleys (LR1, LR2), each of which winds up two parachute belts (11, 12, 13, 14) in the same direction, and at least one flare-cord pulley (FR1, FR2), onto which the at least one flare cord (15a, 15b) can be wound, wherein the rotational movement of the load pulleys (LR1, LR2) and the rotational movement of the at least one flare-cord pulley are coupled together, **characterised in that** the coupling of the load pulleys (LR1, LR2) and the flare-cord pulley (FR1, FR2) is formed as a rotationally fixed arrangement on the same shaft (50), wherein the parachute belts (11, 12, 13, 14) on the one hand and the flare cord (15a, 15b) on the other hand are wound up in opposite directions, and **in that** the shaft (50), which is locked in flight, is unlockable at a predetermined desired height above ground by an unlocking means (21) which is known *per se* and comprises a height sensor (71).

2. A load-carrying gliding parachute system according to claim 1, **characterised in that** the height sensor is a laser altimeter (71) for measuring the height above ground.

3. A load-carrying gliding parachute system according to either one of the preceding claims, **characterised in that** the two load pulleys (LR1, LR2) are each connected in a rotationally fixed manner to a flare-cord pulley (FR1, FR2) and are arranged in a rotationally fixed manner on the same shaft (50).

4. A load-carrying gliding parachute system according to any one of the preceding claims, **characterised in that** the unlocking means (21) has an unlocking bolt (27) biassed into its locking position by a tension rope (25), and a cutting device (23) which co-operates with the tension rope (25), wherein the cutting device (23) is actuated when the predetermined desired height is reached.

5. A load-carrying gliding parachute system according to any one of the preceding claims, **characterised in that** locking members are provided on the unlocking means (21), by means of which locking members different locking positions can be set for adaptation of the flare tension path in order, accordingly, to produce varyingly great lift effects over time during flare.

6. A load-carrying gliding parachute system according to any one of the preceding claims, **characterised in that** an adjusting device is provided for adjusting the flare tension path, by means of which adjusting device the flare tension path can be adjusted manually or via a regulating or control means.

7. A load-carrying gliding parachute system according to any one of the preceding claims, **characterised in that** a braking means (81, 82, 85) is provided, by means of which the rope tensioning speed of the flare cord (15; 15a, 15b) can be adapted by adjusting the braking effect after disengagement of the unlocking means (21).

8. A load-carrying gliding parachute system according to claim 7, **characterised in that** an adjusting device is provided for adjusting the braking effect during unwinding of the flare cord, by means of which adjusting device the braking effect can be adjusted manually or via a regulating or control means.

9. A load-carrying gliding parachute system according to any one of the preceding claims, **characterised in that** the unlocking means (100) for unlocking the load pulleys (LR1, LR2) has a locking member (101) which is actuated by a balancing means in the form of a rotatably mounted balance beam (103) forming two lever arms (125c, 126c),
- wherein a first pretensioning means (125e) acts on the first lever arm (125c) in a first direction of rotation, wherein a first cord (105) loaded by a weight (111) pretensions the first pretensioning means (125e) counter to the first direction of rotation and
- wherein a second cord (106) loaded by the weight (111) is fixed to the second lever arm (126c) so that a tensile force acting in the cord acts on the second lever arm (126c) in the first direction of rotation, and a second pretensioning means (126e) also acts on the second lever arm (126c) and exerts a spring force thereon counter to the first direction of rotation, and wherein
- the weight (111) hangs from the unlocking means (100) on a measuring cord (109), the length of which corresponds to the predetermined desired height above ground for triggering the flare manoeuvre, and to which the cords (105, 106) are connected, and wherein
- the length of the first lever arm (125c) and the pretensioning means engaging the latter, also the length of the second lever arm (126c) and the pretensioning means engaging the latter, and also the weight (111) are dimensioned so that the balance beam (103) rotates in one and the same direction both when the measuring cord (109) is relieved of load when the weight (111) lands on the ground and when the measuring cord (109) is loaded in addition to the weight (111).

## Revendications

1. Système de parachute de charge comprenant un parachute de charge (10) avec un bord de fuite (H), des sangles de parachute (11, 12, 13, 14) qui relient le parachute de charge (10) à une unité de commande (3), une charge (L) accrochée à l'unité de commande et au moins une corde d'arrondissement (15 ; 15a, 15b) reliée au bord de fuite (H) du parachute de charge (10) pour augmenter la courbure du parachute de charge (10) en utilisant le poids de la charge (L), au moins deux rouleaux de charge (LR1 ou LR2) pour l'enroulement de même sens de deux sangles de parachute respectives (11, 12, 13, 14) et au moins un rouleau de corde d'arrondissement (FR1, FR2), sur lequel peut s'enrouler la au moins corde d'arrondissement (15a, 15b), les mouvements de rotation des rouleaux de charge (LR1, LR2) et du au moins rouleau de corde d'arrondissement étant couplés entre eux, **caractérisé en ce que** le couplage des rouleaux de charge (LR1, LR2) et du rouleau de corde d'arrondissement (FR1, FR2) est réalisé sous forme d'agencement rigide à la torsion sur le même arbre (50), les sangles de parachute (11, 12, 13, 14), d'un côté, et la corde d'arrondissement (15a, 15b), de l'autre côté, étant enroulées en sens contraire, et que l'arbre (50) bloqué en vol peut être déverrouillé à une altitude de consigne prédéfinie par rapport au sol au moyen d'un dispositif de déverrouillage connu (21) en soi, qui renferme un capteur altimétrique (71).

2. Système de parachute de charge suivant la revendication 1, **caractérisé en ce que** le capteur altimétrique est un altimètre à laser (71) pour mesurer l'altitude par rapport au sol.

3. Système de parachute de charge suivant l'une des revendications précédentes, **caractérisé en ce que** les deux rouleaux de charge (LR1 ou LR2) sont assemblés chacun de façon rigide à la torsion avec un rouleau de corde d'arrondissement (FR1, FR2) et sont disposés sur le même arbre (50) de façon rigide à la torsion.

4. Système de parachute de charge suivant l'une des revendications précédentes, **caractérisé en ce que** le dispositif de déverrouillage (21) présente un axe de déverrouillage (27), précontraint par un câble tracteur (25) dans sa position de verrouillage, et un dispositif de coupe (23) qui coopère avec le câble tracteur (25), le dispositif de coupe (23) étant actionné lorsque l'altitude de consigne prédéfinie est atteinte.

5. Système de parachute de charge suivant l'une des revendications précédentes, **caractérisé en ce que** des éléments de verrouillage, qui permettent de fixer différentes positions de verrouillage pour l'adaptation de la course de traction d'arrondissement, sont prévus sur le dispositif de déverrouillage (21) pour régler en conséquence des effets de sustentation différemment élevés dans le temps lors de l'arrondissement.

6. Système de parachute de charge suivant l'une des revendications précédentes, **caractérisé en ce qu'**il est prévu un dispositif de réglage de la course de traction d'arrondissement, par lequel peut s'effectuer le réglage de la course de traction manuellement ou par l'intermédiaire d'un dispositif de régulation ou de contrôle.

7. Système de parachute de charge suivant l'une des revendications précédentes, **caractérisé en ce qu'**il est prévu un dispositif de freinage (81, 82, 85) qui permet d'adapter, par l'intermédiaire du réglage de l'effet de frein, la vitesse de traction de la corde d'arrondissement (15 ; 15a, 15b) après le déblocage du dispositif de déverrouillage (21).

8. Système de parachute de charge suivant la revendication 7, **caractérisé en ce qu'**il est prévu un dispositif de réglage de l'effet de frein lors du déroulement de la corde d'arrondissement, par lequel peut s'effectuer le réglage de l'effet de frein manuellement ou par l'intermédiaire d'un dispositif de régulation ou de contrôle.

9. Système de parachute de charge suivant l'une des revendications précédentes, **caractérisé en ce que** le dispositif de déverrouillage (100) des rouleaux de charge (LR1 ou LR2) présente un élément de verrouillage (101), qui est actionné par un dispositif d'équilibrage en forme d'une bascule (103) montée tournante et formant deux bras de levier (125c, 126c),
- un premier dispositif de précontrainte (125e) agissant sur le premier bras de levier (125c) dans un premier sens de rotation, une première corde (105) chargée par un poids (111) précontraignant le premier dispositif de précontrainte (125e) dans le sens contraire au premier sens de rotation et
- une seconde corde (106) chargée par le poids (111) étant fixée sur le second bras de levier (126c), de sorte qu'une force de traction agissant dans la corde s'exerce sur le second bras de levier (126c) dans le premier sens de rotation et un second dispositif de précontrainte (126e) agit par ailleurs sur le second bras de levier (126c), lequel dispositif exerce sur ce bras une force de ressort de sens contraire au premier sens de rotation, et
- le poids (111) pendant du dispositif de déverrouillage (100) sur une corde de mesure (109), dont la longueur correspond à l'altitude de consigne prédéfinie pour le déclenchement de la manoeuvre d'arrondissement par rapport au sol et qui est reliée aux cordes (105, 106) et
- la longueur du premier bras de levier (125c) et le dispositif de précontrainte agissant sur ce dernier, ainsi que la longueur du second bras de levier (126c) et le dispositif de précontrainte agissant sur ce dernier, ainsi que le poids (111) étant dimensionnés de telle sorte que la bascule (103) tourne dans une seule et même direction lorsque la corde de mesure (109) est soulagée par l'arrivée du poids (111) sur le sol comme lorsque la corde de mesure (109) est chargée en supplément du poids (111).
